# FASCICULE DE BREVET EUROPEEN

(11) **EP 3 658 394 B1**
(45) Date de publication et mention de la délivrance du brevet: **09.06.2021**
(21) Numéro de dépôt: 18755872.1
(22) Date de dépôt: 26.07.2018
(51) Int. Cl.: B60H 1/00, B60H 1/32

(54) **PROCEDE DE GESTION D'UN CIRCUIT DE CLIMATISATION INVERSIBLE INDIRECT DE VEHICULE AUTOMOBILE**
VERFAHREN ZUR VERWALTUNG EINES INDIREKTEN REVERSIBLEN KLIMAANLAGENKREISLAUFS FÜR EIN KRAFTFAHRZEUG
METHOD FOR MANAGING AN INDIRECT REVERSIBLE AIR-CONDITIONING CIRCUIT FOR A MOTOR VEHICLE

(30) Priorité: 28.07.2017 FR 1757219
(43) Date de publication de la demande: 03.06.2020
(73) Titulaire: Valeo Systemes Thermiques, 78322 Le Mesnil Saint-Denis Cedex (FR)
(72) Inventeur: BENOUALI, Jugurtha, 78322 Le Mesnil Saint-Denis Cedex (FR); BEAUVIS, Régis, 78322 Le Mesnil Saint-Denis Cedex (FR); LIU, Jin-Ming, 78322 Le Mesnil Saint-Denis Cedex (FR); PORTO, Muriel, 78322 Le Mesnil Saint-Denis Cedex (FR)
(74) Mandataire: Neuviale, Bertrand
(86) Numéro de dépôt international: PCT/FR2018/051924
(87) Numéro de publication internationale: WO 2019/020954

(56) Documents cités:
- EP-A1- 2 933 586
- DE-A1-102014 217 960
- FR-A1- 3 013 265
- FR-A1- 3 022 852
- FR-A1- 3 031 576
- US-A1- 2004 079 096

## Description

L'invention se rapporte au domaine des véhicules automobiles et plus particulièrement à un circuit de climatisation de véhicule automobile et son procédé de gestion en mode pompe à chaleur.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est-à-dire qu'il peut utiliser un mode de fonctionnement pompe à chaleur dans lequel il est apte à absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié. De telles architectures sont notamment connues des documents FR 3 022 852, FR 3 013 265 ou EP 2933586A1.

Cela est possible notamment en utilisant un circuit de climatisation indirect. On entend par indirect ici que le circuit de climatisation comporte deux boucles de circulation de deux fluides distincts (comme par exemple un fluide réfrigérant d'une part et de l'eau glycolée d'autre part) afin d'effectuer les différents échanges de chaleur.

Le circuit de climatisation comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles.

Un tel circuit de climatisation permet une utilisation selon différents modes de fonctionnement notamment dans un mode déshumidification simple dérivé du mode réfrigérant et un mode de déshumidification total dérivé du mode pompe à chaleur. Cependant, lors de ces modes de fonctionnement, il est possible que la quantité d'énergie calorifique générée soit importante et donc que le flux d'air arrivant dans l'habitacle soit trop chaud et nuise au confort des occupants. Cela est particulièrement le cas lorsque le circuit de climatisation est également utilisé pour refroidir des éléments tels que des batteries, de l'électronique de puissance ou alors un ou plusieurs moteurs électriques.

Un des buts de la présente invention est donc de remédier au moins partiellement aux inconvénients de l'art antérieur et de proposer un procédé de gestion d'un circuit de climatisation inversible amélioré notamment en mode pompe à chaleur et en mode déshumidification pompe à chaleur.

La présente invention concerne donc un procédé de gestion d'un circuit de climatisation indirect inversible pour véhicule automobile comportant une première boucle de fluide réfrigérant dans laquelle circule un fluide réfrigérant et comprenant un premier échangeur de chaleur bifluide agencé conjointement sur la première boucle de fluide réfrigérant et sur une deuxième boucle de fluide caloporteur dans laquelle circule un premier fluide caloporteur, le premier échangeur de chaleur bifluide étant disposé de façon à permettre les échanges de chaleur entre la première boucle de fluide réfrigérant et la deuxième boucle de fluide caloporteur,
la première boucle de fluide réfrigérant comportant dans le sens de circulation du fluide réfrigérant :
∘ un compresseur,
∘ le premier échangeur de chaleur bifluide, disposé en aval dudit compresseur,
∘ un premier dispositif de détente,
∘ un premier échangeur de chaleur étant destiné à être traversé par un flux d'air intérieur au véhicule automobile,
∘ un deuxième dispositif de détente,
∘ un deuxième échangeur de chaleur étant destiné à être traversé par un flux d'air extérieur au véhicule automobile, et
∘ une conduite de contournement du deuxième échangeur de chaleur,
la deuxième boucle de fluide caloporteur comprenant :
- un radiateur externe et un radiateur interne disposés en parallèle l'un de l'autre,
- un dispositif de redirection du premier fluide caloporteur en provenance du premier échangeur de chaleur bifluide vers le radiateur externe et/ou vers le radiateur interne, et
- un capteur de température du premier fluide caloporteur disposé en aval du premier échangeur de chaleur bifluide,
ledit circuit étant apte à fonctionner selon :
- un mode de déshumidification simple, dérivé d'un mode de refroidissement dans lequel le flux d'air intérieur (100) est refroidi, et où le flux d'air intérieur (100) est refroidi puis réchauffé avant d'arriver dans l'habitacle, et
- un mode de déshumidification total, dérivé d'un mode pompe à chaleur dans lequel le flux d'air intérieur (100) est réchauffé, et où le flux d'air intérieur (100) est refroidi puis réchauffé avant d'arriver dans l'habitacle,
le circuit de climatisation inversible indirect comportant une unité centrale de contrôle relié au capteur de température du premier fluide caloporteur et apte à piloter le dispositif de redirection du premier fluide caloporteur,
lorsque le circuit de climatisation indirect est en mode mode de déshumidification total ou simple, l'unité centrale de contrôle commande le dispositif de redirection du premier fluide caloporteur de sorte que :
- si la température mesurée au niveau du capteur de température est supérieure ou égale à T72t + Y1, le premier fluide caloporteur est redirigé à la fois vers le radiateur interne et vers le radiateur externe, dans lequel T72t est une valeur consigne de température du premier fluide caloporteur au niveau du capteur de température et Y1 un différentiel de température compris entre 0,5 et 5 °C,
- si la température mesurée au niveau du capteur de température est inférieure ou égale à T72t - Y2, le premier fluide caloporteur est redirigé uniquement vers le radiateur interne, dans lequel T72t est la valeur consigne de température du premier fluide caloporteur au niveau du capteur de température et Y2 un différentiel de température compris entre 0,5 et 2 °C.

Selon un aspect de l'invention, l'unité centrale de contrôle commande le dispositif de redirection du premier fluide de sorte que la température moyenne du flux d'air intérieur en sortie du radiateur interne soit comprise entre 40 et 48°C.

Selon un autre aspect de l'invention, lorsque le circuit de climatisation inversible est en mode de déshumidification total ou simple, ladite unité centrale de contrôle détermine le régime du compresseur de sorte que la température moyenne du flux d'air intérieur en sortie du premier échangeur de chaleur soit comprise entre 2 et 4°C.

Selon un autre aspect de l'invention, la première boucle de fluide réfrigérant comporte une conduite de dérivation comportant un troisième dispositif de détente disposé en amont d'un deuxième échangeur de chaleur bifluide, ledit deuxième échangeur de chaleur bifluide étant également agencé conjointement sur une boucle de gestion thermique secondaire dans laquelle circule un deuxième fluide caloporteur, ladite boucle de dérivation étant disposée entre un premier point de jonction disposé en aval du premier échangeur de chaleur bifluide, entre ledit premier échangeur de chaleur bifluide et le premier dispositif de détente et un deuxième point de jonction disposé en amont compresseur, entre le troisième échangeur de chaleur et ledit compresseur.

Selon un autre aspect de l'invention, l'unité centrale de contrôle détermine le régime du compresseur également de sorte que la température moyenne du deuxième fluide caloporteur en sortie du deuxième échangeur de chaleur bifluide au sein de la boucle de gestion thermique secondaire soit comprise entre 23 et 27°C.

Selon un autre aspect de l'invention, la deuxième boucle de fluide caloporteur comporte :
∘ une première conduite de circulation du premier fluide caloporteur comportant le radiateur interne et reliant un premier point de connexion disposé en aval du premier échangeur de chaleur bifluide et un deuxième point de connexion disposé en amont dudit premier échangeur de chaleur bifluide,
∘ une deuxième conduite de circulation du premier fluide caloporteur comportant le radiateur externe et reliant le premier point de connexion et le deuxième point de connexion, et
∘ une pompe disposée en aval ou en amont du premier échangeur de chaleur bifluide, entre le premier point de connexion et le deuxième point de connexion.

Selon un autre aspect de l'invention, le dispositif de redirection du premier fluide caloporteur comporte une deuxième vanne d'arrêt disposée sur la deuxième conduite de circulation, l'ouverture et la fermeture de ladite deuxième vanne d'arrêt étant commandée par l'unité centrale de contrôle.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation inversible indirect,
- la figure 2 montre un dispositif de détente selon un mode de réalisation alternatif,
- la figure 3 montre une représentation schématique de la deuxième boucle de fluide caloporteur du circuit de climatisation inversible indirect de la figure 1, selon un mode de réalisation alternatif,
- la figure 4 montre une représentation schématique d'un dispositif de chauffage, ventilation et/ou climatisation,
- les figures 5 à 8b montrent une représentation schématique du circuit de climatisation inversible de la figure 1 selon différents modes de fonctionnement,
- la figure 9 montre un diagramme de l'ouverture ou de la fermeture de la deuxième vanne d'arrêt en fonction de la température du premier fluide caloporteur,
- la figure 10 montre un diagramme de la variation de divers paramètres du circuit de climatisation inversible indirect en fonction du temps.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

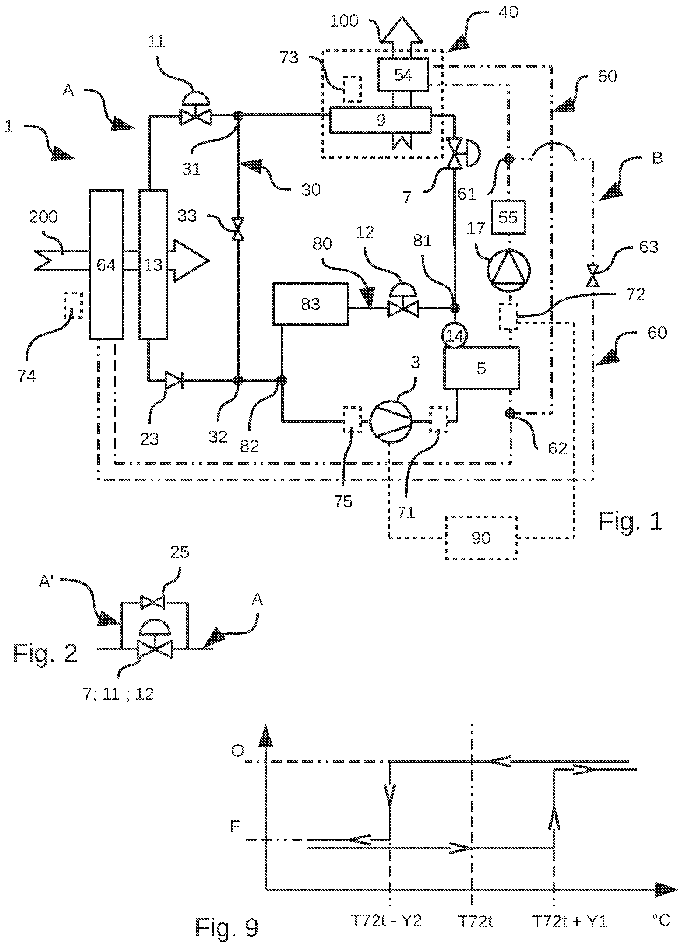

La figure 1 montre un circuit de climatisation indirect 1 pour véhicule automobile. Ce circuit de climatisation indirect 1 comporte notamment :
- une première boucle de fluide réfrigérant A dans laquelle circule un fluide réfrigérant,
- une deuxième boucle de fluide caloporteur B dans laquelle circule un fluide caloporteur, et
- un premier échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A comporte plus particulièrement dans le sens de circulation du fluide réfrigérant :
∘ un compresseur 3,
∘ le premier échangeur de chaleur bifluide 5, disposé en aval dudit compresseur 3,
∘ un premier dispositif de détente 7,
∘ un premier échangeur de chaleur 9 étant destiné à être traversé par un flux d'air intérieur 100 au véhicule automobile,
∘ un deuxième dispositif de détente 11,
∘ un deuxième échangeur de chaleur 13 étant destiné à être traversé par un flux d'air extérieur 200 au véhicule automobile, et
∘ une conduite de contournement 30 du deuxième échangeur de chaleur 13.

La conduite de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval du premier échangeur de chaleur 9, entre ledit premier échangeur de chaleur 9 et le deuxième échangeur de chaleur 13. Plus particulièrement, et comme illustré sur la figure 1, le premier point de raccordement 31 est disposé entre le premier échangeur de chaleur 9 et le deuxième dispositif de détente 11. Il est cependant tout à fait possible d'imaginer que le premier point de raccordement 31 soit disposé entre le deuxième dispositif de détente 11 et le deuxième échangeur de chaleur 13 du moment que le fluide réfrigérant a la possibilité de contourner ledit deuxième dispositif de détente 11 ou de le traverser sans subir de perte de pression.

Le deuxième point de raccordement 32 est quant à lui de préférence disposé en aval du deuxième échangeur de chaleur 13, entre ledit échangeur de chaleur 13 et le compresseur 3.

Afin de contrôler le passage du fluide réfrigérant au sein de la conduite de contournement 30 ou non, cette dernière comporte une première vanne d'arrêt 33. Pour que le fluide réfrigérant ne traverse pas le deuxième échangeur de chaleur 13, le deuxième dispositif de détente 11 peut notamment comporter une fonction d'arrêt, c'est-à-dire qu'il est apte à bloquer le flux de fluide réfrigérant lorsqu'il est fermé. Une alternative peut être de disposer une vanne d'arrêt entre le deuxième dispositif de détente 11 et le premier point de raccordement 31.

Une autre alternative (non représentée) peut également être de disposer une vanne trois-voies au niveau du premier point de raccordement 31.

La première boucle de fluide réfrigérant A peut également comporter un clapet antiretour 23 disposé en aval du deuxième échangeur de chaleur 13, entre ledit deuxième échangeur de chaleur 13 et le deuxième point de raccordement 32 afin d'éviter que du fluide réfrigérant issu de la première conduite de contournement 30 ne reflux vers le deuxième échangeur de chaleur 13.

Par vanne d'arrêt, clapet antiretour, vanne trois-voies ou dispositif de détente avec fonction d'arrêt, on entend ici des éléments mécaniques ou électromécaniques pouvant être pilotés par une unité de commande électronique embarquée dans le véhicule automobile.

La première boucle de fluide réfrigérant A peut également comporter un premier échangeur de chaleur interne (non représenté) permettant un échange de chaleur entre le fluide réfrigérant à haute pression en sortie du premier échangeur de chaleur bifluide 5 et le fluide réfrigérant à basse pression en sortie du deuxième échangeur de chaleur 13 ou de la conduite de contournement 30. Ce premier échangeur de chaleur interne comporte notamment une entrée et une sortie de fluide réfrigérant à basse pression en provenance du deuxième point de raccordement 32, ainsi qu'une entrée et une sortie de fluide réfrigérant à haute pression en provenance du premier échangeur de chaleur bifluide 5.

Par fluide réfrigérant à haute pression, on entend par là un fluide réfrigérant ayant subi une augmentation de pression au niveau du compresseur 3 et n'ayant pas encore subi de perte de pression du fait d'un des dispositifs de détente. Par fluide réfrigérant à basse pression on entend par là un fluide réfrigérant ayant subi une perte de pression et à une pression proche de celle à l'entrée du compresseur 3.

La première boucle de fluide réfrigérant A peut en outre comporter également un deuxième échangeur de chaleur interne (non représenté) permettant un échange de chaleur entre le fluide réfrigérant à haute pression en sortie du premier échangeur de chaleur interne et le fluide réfrigérant à basse pression circulant dans la conduite de contournement 30. Ce deuxième échangeur de chaleur interne comporte notamment une entrée et une sortie de fluide réfrigérant à basse pression en provenance du premier point de raccordement 31, ainsi qu'une entrée et une sortie de fluide réfrigérant à haute pression en provenance du premier échangeur de chaleur interne. Comme illustré sur la figure 1 le deuxième échangeur de chaleur interne peut être disposé en aval de la première vanne d'arrêt 33.

Au moins un des premier ou deuxième échangeurs de chaleur interne peut être un échangeur de chaleur coaxial, c'est à dire comportant deux tubes coaxiaux et entre lesquels s'effectuent les échanges de chaleur.

De préférence, le premier échangeur de chaleur interne peut être un échangeur de chaleur interne coaxial d'une longueur comprise entre 50 et 120mm alors que le deuxième échangeur de chaleur interne peut être un échangeur de chaleur interne coaxial d'une longueur comprise entre 200 et 700mm.

La première boucle de fluide réfrigérant A peut également comporter une bouteille déshydratante 14 disposée en aval du premier échangeur de chaleur bifluide 5, plus précisément entre ledit premier échangeur de chaleur bifluide 5 et le premier dispositif de détente 7. Une telle bouteille déshydratante 14 disposée sur le côté haute pression du circuit de climatisation, c'est à dire en aval de l'échangeur de chaleur bifluide 5 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est à dire en amont du compresseur 3, notamment en amont du premier échangeur de chaleur interne.

Les premier 7 et deuxième 11 dispositifs de détente peuvent être des détendeurs électroniques, c'est à dire dont la pression du fluide réfrigérant en sortie est contrôlée par un actionneur qui fixe la section d'ouverture du dispositif de détente, fixant ainsi la pression du fluide en sortie. Un tel détendeur électronique est notamment apte à laisser passer le fluide réfrigérant sans perte de pression lorsque ledit dispositif de détente est ouvert complètement.

Selon un mode de réalisation préféré, le premier dispositif de détente 7 est un détendeur électronique pilotable par une unité de contrôle intégrée au véhicule et le deuxième dispositif de détente 11 est un détendeur thermostatique.

Le deuxième dispositif de détente 11 peut être notamment un détendeur thermostatique intégrant une fonction d'arrêt. Dans ce cas, lesdits premier 7 et deuxième 11 dispositifs de détente peuvent être contournés par une conduite de dérivation A', comportant notamment une vanne d'arrêt 25, comme illustré sur la figure 2. Cette conduite de dérivation A' permet au fluide réfrigérant de contourner lesdits premier 7 et deuxième 11 dispositifs de détente sans qu'il subisse une perte de pression. De préférence, au moins le deuxième dispositif de détente 11 est un détendeur thermostatique comportant une conduite de dérivation A'. Le premier dispositif de détente 7 peut également comporter une fonction d'arrêt ou alors comporter une vanne d'arrêt en aval afin de bloquer ou non le passage du fluide réfrigérant.

La première boucle de fluide réfrigérant A comporte également une conduite de dérivation 80 du premier dispositif de détente 7 et du premier échangeur de chaleur 9. Cette conduite de dérivation 80 comporte un troisième dispositif de détente 12 disposé en amont d'un deuxième échangeur de chaleur bifluide 83. Ce deuxième échangeur de chaleur bifluide 83 est également agencé conjointement sur une boucle de gestion thermique secondaire. La boucle de gestion thermique secondaire peut plus particulièrement être une boucle dans laquelle circule un deuxième fluide caloporteur et reliée à des échangeurs de chaleur ou plaques froides au niveau de batteries et/ou d'éléments électroniques.

Le troisième dispositif de détente 12 peut également comporter une fonction d'arrêt afin de permettre ou non au fluide réfrigérant de traverser la conduite de dérivation 80. Une alternative est de disposer une vanne d'arrêt sur la deuxième conduite de contournement, en amont du troisième dispositif de détente 12.

La conduite de dérivation 80 est connectée d'une part en amont du premier dispositif de détente 7. Cette connexion est réalisée au niveau d'un premier point de jonction 81 disposé en amont du premier dispositif de détente 7, entre le premier échangeur de chaleur bifluide 5 et ledit premier dispositif de détente 7.

La conduite de dérivation 80 est connectée d'autre part au niveau d'un deuxième point de jonction 82 disposé en amont du compresseur 3, entre le troisième échangeur de chaleur 13 et ledit compresseur 3. Sur la figure 1, le deuxième point de jonction 82 est disposé entre le deuxième point de raccordement 32 de la conduite de contournement 30 et le compresseur 3. Il est cependant tout à fait possible d'imaginer d'autres modes de réalisation comme par exemple sur la conduite de contournement 30 en aval de la première vanne d'arrêt 33.

La deuxième boucle de fluide caloporteur B comporte quant à elle :
∘ le premier échangeur de chaleur bifluide 5 et peut comporter :
   ∘ une première conduite de circulation 50 du premier fluide caloporteur comportant un radiateur interne 54 destiné à être traversé par un flux d'air intérieur 100 au véhicule automobile, et reliant un premier point de connexion 61 disposé en aval du premier échangeur de chaleur bifluide 5 et un deuxième point de connexion 62 disposé en amont dudit premier échangeur de chaleur bifluide 5,
   ∘ une deuxième conduite de circulation 60 du premier fluide caloporteur comportant un radiateur externe 64 destiné à être traversé par un flux d'air extérieur 200 au véhicule automobile, et reliant le premier point de connexion 61 disposé en aval du premier échangeur de chaleur bifluide 5 et le deuxième point de connexion 62 disposé en amont dudit premier échangeur de chaleur bifluide 5, et
∘ une pompe 17 disposée en aval ou en amont du premier échangeur de chaleur bifluide 5, entre le premier point de connexion 61 et le deuxième point de connexion 62.

Le circuit de climatisation inversible indirecte 1 comporte au sein de la deuxième boucle de fluide caloporteur B un dispositif de redirection du premier fluide caloporteur en provenance du premier échangeur de chaleur bifluide 5 vers la première conduite de circulation 50 et/ou vers la deuxième conduite de circulation 60.

Comme illustré sur la figure 1, ledit dispositif de redirection du premier fluide caloporteur en provenance du premier échangeur de chaleur bifluide 5 peut notamment comporter une deuxième vanne d'arrêt 63 disposée sur la deuxième conduite de circulation 60 afin de bloquer ou non le premier fluide caloporteur et de l'empêcher de circuler dans ladite deuxième conduite de circulation 60.

Ce mode de réalisation permet notamment de limiter le nombre de vannes sur la deuxième boucle de fluide caloporteur B et permet ainsi de limiter les coûts de production.

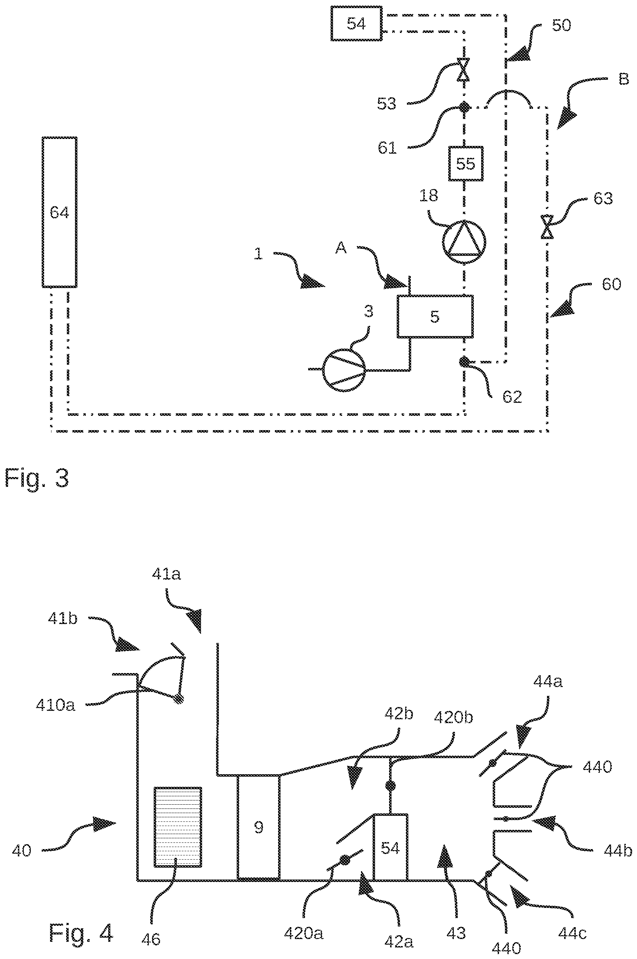

Selon un mode de réalisation alternatif illustré à la figure 3, représentant la deuxième boucle de fluide caloporteur B, le dispositif de redirection du premier fluide caloporteur en provenance du premier échangeur de chaleur bifluide 5 peut notamment comporter
- une deuxième vanne d'arrêt 63 disposée sur la deuxième conduite de circulation 60 afin de bloquer ou non le premier fluide caloporteur et de l'empêcher de circuler dans ladite deuxième conduite de circulation 60, et
- une troisième vanne d'arrêt 53 disposée sur la première conduite de circulation 50 afin de bloquer ou non le premier fluide caloporteur et l'empêcher de circuler dans ladite première conduite de circulation 50.

La deuxième boucle de fluide caloporteur B peut également comporter un élément électrique chauffant 55 du premier fluide caloporteur. Ledit élément électrique chauffant 55 est notamment disposé, dans le sens de circulation du premier fluide caloporteur, en aval du premier échangeur de chaleur bifluide 5, entre ledit premier échangeur de chaleur bifluide 5 et le premier point de jonction 61.

Le radiateur interne 54 ainsi que le premier échangeur de chaleur 9 sont plus particulièrement disposés au sein d'un dispositif de chauffage, ventilation et/ou climatisation 40. Comme illustré à la figure 4, le dispositif de chauffage, ventilation et/ou climatisation 40 peut comporter une conduite d'alimentation 41a en air extérieur et une conduite d'alimentation 41b en air recirculé (c'est-à-dire qui provient de l'habitacle). Ces deux conduites d'alimentation 41a et 41b amènent toutes deux l'air au niveau du premier échangeur de chaleur 9 afin qu'il le traverse. Afin de choisir d'où l'air traversant le premier échangeur de chaleur 9 provient, le dispositif de chauffage, ventilation et/ou climatisation 40 comporte une volet d'obturation 410a, par exemple un volet de type tambour, apte à refermer totalement ou partiellement la conduite d'alimentation 41a en air extérieur ou la conduite d'alimentation 41b en air recirculé.

En son sein, le dispositif de chauffage, ventilation et/ou climatisation 40 comporte une conduite de chauffage 42a qui permet d'amener de l'air étant passé par le premier échangeur de chaleur 9, au niveau du radiateur interne 54 afin qu'il le traverse et soit réchauffé avant d'arriver dans une chambre de distribution 43. Cette conduite de chauffage 42a comporte également un volet d'obturation 420a apte à la refermer totalement ou partiellement.

Le dispositif de chauffage, ventilation et/ou climatisation 40 peut comporter également une conduite de contournement 42b du radiateur externe 54. Cette conduite de contournement 42b permet à l'air étant passé par le premier échangeur de chaleur 9, d'aller directement dans la chambre de distribution 43, sans passer par le radiateur interne 54. Cette conduite de contournement 42b comporte également un volet d'obturation 420b apte à la refermer totalement ou partiellement.

Au niveau de la chambre de distribution 43 l'air peut être envoyé vers le pare-brise par une conduite supérieure 44a, le tableau de bord de l'habitacle par une conduite médiane 44b et/ou vers le bas du tableau de bord de l'habitacle par une conduite inférieure 44c. Chacune de ces conduites 44a, 44b, 44c comportant un volet d'obturation 440 apte à les refermer totalement ou partiellement.

Le dispositif de chauffage, ventilation et/ou climatisation 40 comporte également un pulseur 46 afin de propulser le flux d'air interne 100. Ce pulseur 46 peut être disposé en amont du premier échangeur de chaleur 9 selon le sens de circulation du flux d'air intérieur 100.

Comme illustré sur la figure 1, Le circuit de climatisation inversible indirect 1 comporte une unité centrale de contrôle 90 lui permettant de passer d'un mode de fonctionnement à un autre. L'unité centrale de contrôle 90 est notamment reliée à un capteur de température 72 du premier fluide caloporteur disposé en aval du premier échangeur de chaleur bifluide 5 et est apte à piloter le dispositif de redirection du premier fluide caloporteur. Pour cela, l'unité centrale de contrôle 90 est reliée également à la deuxième vanne d'arrêt 63 et commande son ouverture et sa fermeture.

L'unité centrale de contrôle 90 peut également être reliée au compresseur 3 afin de commander le régime de ce dernier.

L'unité centrale de contrôle 90 peut également être reliée aux différents dispositifs de détente 7,11 et 12, afin de contrôler leur ouverture et ainsi définir la perte de pression que subit le fluide réfrigérant en les traversant, contrôler s'ils peuvent être traversés sans perte de pression où s'ils bloquent le flux de fluide réfrigérant.

L'unité centrale de contrôle 90 peut également être reliée à différents capteurs comme par exemple :
- un capteur de pression 71 en sortie du compresseur 3,
- un capteur de la température 73 du flux d'air interne 100 en sortie du premier échangeur de chaleur 9,
- un capteur de la température 74 de l'air extérieur,
- un capteur de pression et de température 75 en entrée du compresseur 3 et
- un capteur de la température (non représenté) du deuxième fluide caloporteur au sein de la boucle de gestion thermique secondaire en sortie du deuxième échangeur de chaleur bifluide 83.

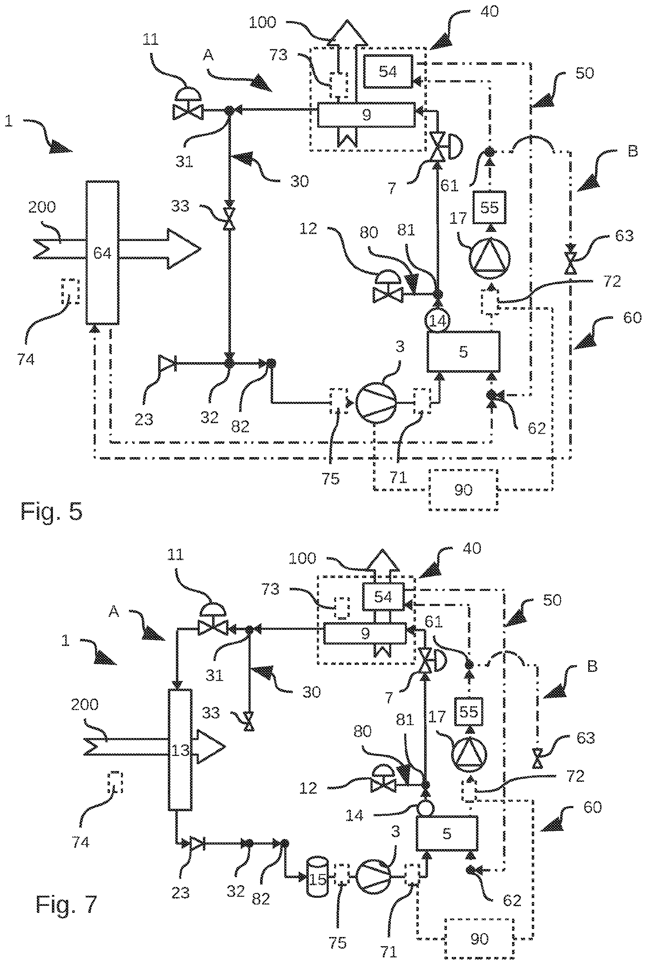

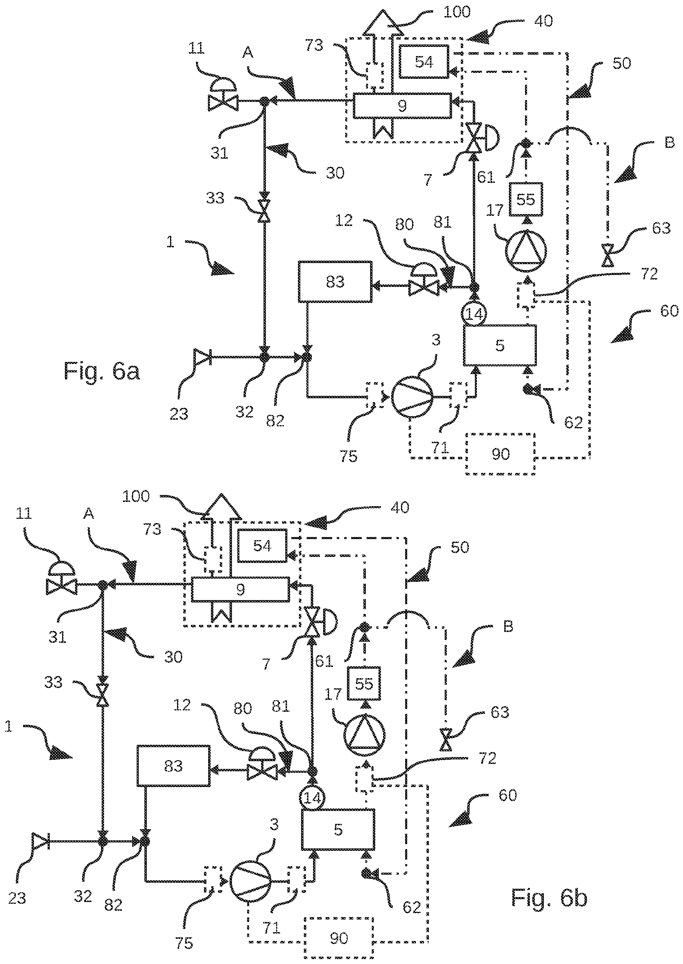

Le circuit de climatisation inversible indirect 1 décrit ci-dessus peut fonctionner selon différents modes de fonctionnement illustrés aux figures 5a, 5b, 6a et 6b. Sur ces figures, seuls les éléments et conduites dans lesquels circulent le fluide réfrigérant et le fluide caloporteur sont représentés.

### Mode de refroidissement :

Dans ce mode de fonctionnement illustré à la figure 5, le flux d'air intérieur 100 est refroidi et l'énergie calorifique récupérée lors de ce refroidissement est relâchée dans le flux d'air externe 200.

Pour le circuit de climatisation inversible indirect 1 décrit notamment à la figure 1, le fluide réfrigérant passe successivement dans :
- le compresseur 3 dans lequel le fluide réfrigérant passe à haute pression,
- le premier échangeur de chaleur bifluide 5 dans lequel le fluide réfrigérant transmet de l'énergie calorifique au premier fluide caloporteur circulant dans la deuxième boucle de fluide caloporteur B,
- le premier dispositif de détente 7 dans lequel le fluide réfrigérant subit une perte de pression et passe à basse pression,
- le premier échangeur de chaleur 9 dans lequel le fluide réfrigérant récupère de l'énergie calorifique en refroidissant le flux d'air interne 100, et
- la boucle de contournement 30 avant de retourner au compresseur 3.

Afin que le fluide réfrigérant passe dans la boucle de contournement 30, la première vanne d'arrêt 33 est ouverte et le deuxième dispositif de détente 11 est fermé afin de ne pas laisser passer le fluide réfrigérant.

Au niveau de la deuxième boucle de fluide caloporteur B, le premier fluide caloporteur relâche l'énergie calorifique obtenue au niveau du premier échangeur de chaleur bifluide 5 dans le flux d'air extérieur 200 au niveau du radiateur externe 64. Pour cela, la deuxième vanne d'arrêt 63 est ouverte. Le premier fluide caloporteur peut passer par le radiateur interne 54, cependant ce dernier n'est pas traversé par le flux d'air interne 100, par exemple en fermant le volet d'obturation 420a et en ouvrant le volet d'obturation 420b dans le dispositif de chauffage, ventilation et/ou climatisation 40.

Dans ce mode de refroidissement, si le troisième dispositif de détente 12 est ouvert (non représenté), une partie du fluide réfrigérant à haute pression en sortie du premier échangeur de chaleur bifluide 5 passe dans la conduite de dérivation 80. En traversant le troisième dispositif de détente 12, ce fluide réfrigérant subit une perte de pression et passe à basse pression. Le fluide réfrigérant passe ensuite dans le deuxième échangeur de chaleur bifluide 83 et récupère de l'énergie calorifique en refroidissant le deuxième fluide caloporteur circulant dans la boucle de gestion thermique secondaire. Le fluide réfrigérant rejoint ensuite le compresseur 3. L'énergie calorifique récupérée de la boucle de gestion thermique secondaire est évacuée au niveau du radiateur externe 64.

### Mode de déshumidification simple :

Ce mode de déshumidification simple, illustré à la figure 6a, est un mode de fonctionnement dérivé du mode de refroidissement. Ce mode de déshumidification simple diffère du mode de refroidissement par le fait que le premier fluide caloporteur peut évacuer de l'énergie calorifique également au niveau du radiateur interne 54 dans le flux d'air intérieur 100.

Ainsi, au niveau de la première boucle de fluide réfrigérant A, le trajet du fluide réfrigérant est identique à celui du mode de refroidissement.

Au niveau de la deuxième boucle de fluide réfrigérant B, le flux d'air intérieur 100 qui traverse le radiateur interne 54 est réchauffé. Pour cela, par exemple, le volet d'obturation 420a est ouvert et le volet d'obturation 420b est fermé dans le dispositif de chauffage, ventilation et/ou climatisation 40.

Du fait du refroidissement du flux d'air intérieur 100 au niveau du premier échangeur de chaleur 9 qui permet la condensation de son humidité, puis de son réchauffage au niveau du radiateur interne 54, ledit flux d'air intérieur 100 est déshumidifié.

De même que précédemment, si le troisième dispositif de détente 12 est ouvert, comme illustré à la figure 6b une partie du fluide réfrigérant à haute pression en sortie du premier échangeur de chaleur bifluide 5 passe dans la conduite de dérivation 80. En traversant le troisième dispositif de détente 12 ce fluide réfrigérant subit une perte de pression et passe à basse pression. Le fluide réfrigérant passe ensuite dans le deuxième échangeur de chaleur bifluide 83 et récupère de l'énergie calorifique en refroidissant le deuxième fluide caloporteur circulant dans la boucle de gestion thermique secondaire. Le fluide réfrigérant rejoint ensuite le compresseur 3. L'énergie calorifique récupérée de la boucle de gestion thermique secondaire est évacuée au niveau du radiateur externe 64 et du radiateur interne 54.

### Mode pompe à chaleur :

La figure 7 montre un procédé de fonctionnement selon un mode pompe à chaleur dans lequel le flux d'air intérieur 100 est réchauffé, l'énergie calorifique réchauffant le flux d'air intérieur 100 étant récupérée du flux d'air extérieur 200.

Pour le circuit de climatisation inversible indirect 1 illustré à la figure 5a, le fluide réfrigérant passe successivement dans :
- le compresseur 3 dans lequel le fluide réfrigérant passe à haute pression,
- le premier échangeur de chaleur bifluide 5 dans lequel le fluide réfrigérant transmet de l'énergie calorifique au premier fluide caloporteur circulant dans la deuxième boucle de fluide caloporteur B,
- le premier dispositif de détente 7 dans lequel le fluide réfrigérant subit une première perte de pression et passe à une pression intermédiaire,
- le premier échangeur de chaleur 9 dans lequel le fluide réfrigérant rejette de l'énergie calorifique en réchauffant le flux d'air interne 100,
- le deuxième dispositif de détente 11 dans lequel le fluide réfrigérant subit une deuxième perte de pression et passe à basse pression, et
- le deuxième échangeur de chaleur 13 dans lequel le fluide récupère de l'énergie calorifique en refroidissant le flux d'air externe 200, avant de retourner au compresseur 3.

Afin que le fluide réfrigérant ne passe pas dans la boucle de contournement 30, la première vanne d'arrêt 33 est fermée.

Au niveau de la deuxième boucle de fluide caloporteur B, le premier fluide caloporteur relâche l'énergie calorifique obtenue au niveau du premier échangeur de chaleur bifluide 5 dans le flux d'air interne 100 au niveau du radiateur interne 54. Au niveau du dispositif de chauffage, ventilation et/ou climatisation 40, le volet d'obturation 420a est ouvert et le volet d'obturation 420b est fermé.

Ce mode pompe à chaleur est utile pour réchauffer le flux d'air intérieur 100 à la fois au niveau du premier échangeur de chaleur 9 et du radiateur interne 54 en absorbant de l'énergie calorifique au flux d'air extérieur 200 au niveau du deuxième échangeur de chaleur 13.

De plus, l'élément électrique chauffant 55 peut être en fonctionnement afin de fournir un apport supplémentaire d'énergie calorifique au premier fluide caloporteur pour réchauffer le flux d'air intérieur 100.

### Mode de déshumidification total :

Le mode de déshumidification total est un dérivé du mode pompe à chaleur. Dans ce mode de déshumidification total, le flux d'air intérieur 100 est refroidi puis réchauffé avant d'arriver dans l'habitacle,

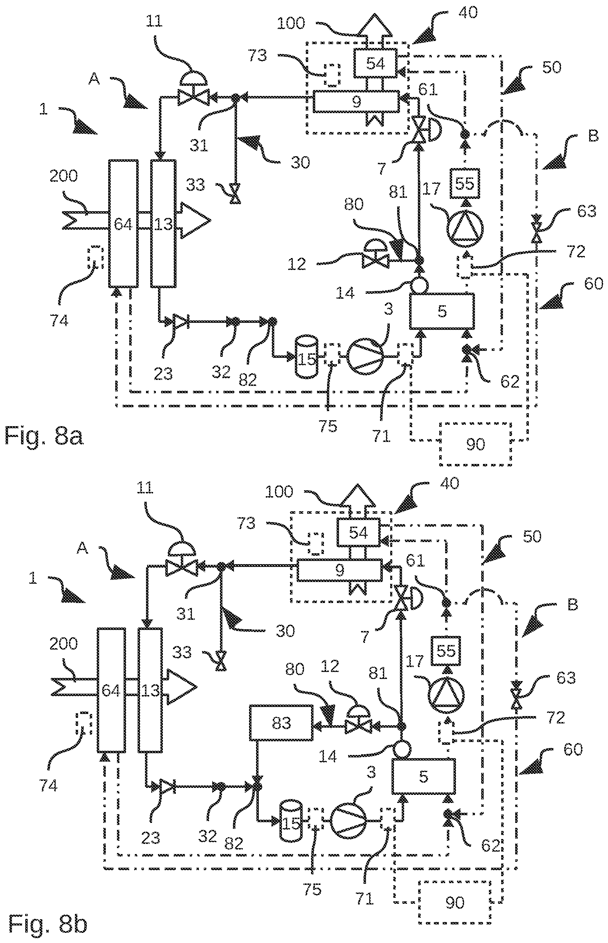

Ce mode de déshumidification total, illustré à la figure 8a, diffère du mode pompe à chaleur par le fait que le fluide réfrigérant traverse le premier dispositif de détente 7 où il passe à basse pression et traverse le deuxième dispositif de détente 11 sans perte de pression.

Ainsi, au niveau de la première boucle de fluide réfrigérant A, le trajet du fluide réfrigérant est identique à celui du mode pompe à chaleur à la différence que le fluide réfrigérant ne subit qu'une seule perte de pression au niveau du premier dispositif de détente 7. Le fluide réfrigérant passe au travers du deuxième dispositif de détente 11 ou le contourne, sans perte de pression.

Le fluide réfrigérant passe ainsi successivement dans :
- le compresseur 3 dans lequel le fluide réfrigérant passe à haute pression,
- le premier échangeur de chaleur bifluide 5 dans lequel le fluide réfrigérant transmet de l'énergie calorifique au premier fluide caloporteur circulant dans la deuxième boucle de fluide caloporteur B,
- le premier dispositif de détente 7 dans lequel le fluide réfrigérant subit une perte de pression et passe à basse pression,
- le premier échangeur de chaleur 9 dans lequel le fluide réfrigérant récupère de l'énergie calorifique en refroidissant le flux d'air interne 100,
- le deuxième dispositif de détente 11 que le fluide réfrigérant traverse sans perte de pression, et
- le deuxième échangeur de chaleur 13 dans lequel le fluide récupère de l'énergie calorifique en refroidissant le flux d'air externe 200, avant de retourner au compresseur 3.

Au niveau de la deuxième boucle de fluide réfrigérant B, le flux d'air intérieur 100 qui traverse le radiateur interne 54 est réchauffé. Pour cela, par exemple, le volet d'obturation 420a est ouvert et le volet d'obturation 420b est fermé dans le dispositif de chauffage, ventilation et/ou climatisation 40. La troisième vanne d'arrêt 63 est également ouverte afin que le premier fluide caloporteur puisse également évacuer de la chaleur dans le flux d'air extérieur 200 au niveau du quatrième échangeur de chaleur 64.

Du fait du refroidissement du flux d'air intérieur 100 au niveau du premier échangeur de chaleur 9 qui permet la condensation de son humidité, puis de son réchauffage au niveau du troisième échangeur de chaleur 54, ledit flux d'air intérieur 100 est déshumidifié.

Au niveau de la deuxième boucle de fluide caloporteur B, le premier fluide caloporteur relâche l'énergie calorifique obtenue au niveau du premier échangeur de chaleur bifluide 5 dans le flux d'air interne 100 au niveau du radiateur interne 54. Au niveau du dispositif de chauffage, ventilation et/ou climatisation 40, le volet d'obturation 420a est ouvert et le volet d'obturation 420b est fermé.

Comme illustré à la figure 8b, si le troisième dispositif de détente 12 est ouvert, une partie du fluide réfrigérant à haute pression en sortie du premier échangeur de chaleur bifluide 5 passe dans la conduite de dérivation 80. En traversant le troisième dispositif de détente 12 ce fluide réfrigérant subit une perte de pression et passe à basse pression. Le fluide réfrigérant passe ensuite dans le deuxième échangeur de chaleur bifluide 83 et récupère de l'énergie calorifique en refroidissant le deuxième fluide caloporteur circulant dans la boucle de gestion thermique secondaire. Le fluide réfrigérant rejoint ensuite le compresseur 3. L'énergie calorifique récupérée de la boucle de gestion thermique secondaire est évacuée au niveau du radiateur interne 54.

La présente invention concerne un procédé de gestion du circuit de climatisation inversible indirecte 1 lorsqu'il fonctionne en mode mode de déshumidification total ou simple, avec ou sans passage du fluide réfrigérant dans le deuxième échangeur de chaleur bifluide 83.

Lorsque le circuit de climatisation indirect 1 est en mode mode de déshumidification total ou simple, l'unité centrale de contrôle 90 commande le dispositif de redirection du premier fluide caloporteur de sorte que si la température mesurée au niveau du capteur de température 72 est supérieure ou égale à T72t + Y1, le premier fluide caloporteur est redirigé à la fois vers le radiateur interne 54 et vers le radiateur externe 64. T72t correspond à une valeur consigne de température du premier fluide caloporteur au niveau du capteur de température 72 et Y1 est un différentiel de température compris entre 0,5 et 5 °C.

Si la température mesurée au niveau du capteur de température 72 est inférieure ou égale à T72t - Y2, le premier fluide caloporteur est redirigé uniquement vers le radiateur interne 54. Y2 est ici un différentiel de température compris entre 0,5 et 2 °C.

On obtient ainsi une ouverture et une fermeture cyclique de la deuxième vanne d'arrêt 63 comme illustré sur le diagramme de la figure 9 en fonction de la température mesurée au niveau du capteur de température 72. Sur la figure 9, la légende F correspond à la fermeture de la deuxième vanne d'arrêt 63 et la légende O à son ouverture.

Le fait de réaliser une telle gestion cyclique permet, si la température du premier fluide caloporteur est basse (inférieure ou égale à T72t - Y2), de rediriger la totalité du premier fluide caloporteur vers le radiateur interne 54 afin que toute l'énergie calorifique qu'il a accumulé soit utilisée pour réchauffer le flux d'air intérieur 100 jusqu'à une température cible.

Si la température du premier fluide caloporteur est élevée (supérieure ou égale à T72t + Yl), l'énergie calorifique accumulée dans le premier fluide caloporteur est utilisée uniquement en partie pour réchauffer le flux d'air intérieur 100 jusqu'à une température cible. L'énergie calorifique en excès est relâchée dans le flux d'air extérieur 200 au niveau du radiateur externe 64. Ce cas de figure est notamment possible lorsque la température extérieure est telle qu'elle est suffisamment basse pour nécessiter un chauffage de l'habitacle mais suffisamment haute pour générer beaucoup d'énergie calorifique en mode déshumidification total ou simple. Une telle température peut être par exemple une température extérieure de l'ordre de 10 à 15°C. Une autre possibilité qui nécessite l'évacuation d'énergie en excès est lorsque la boucle de dérivation 80 est ouverte et que de l'énergie calorifique supplémentaire en provenance de la boucle de gestion thermique secondaire est ajoutée et transmise au premier fluide caloporteur.

Afin de conserver un confort optimal au sein de l'habitacle, l'unité centrale de contrôle 90 commande le dispositif de redirection du premier fluide de sorte que le flux d'air intérieur 100 en sortie du radiateur interne 54 a une température moyenne comprise entre 40 et 48°C. Cette température de sortie du flux d'air intérieur 100 est valable aussi bien en mode déshumidification total ou simple.

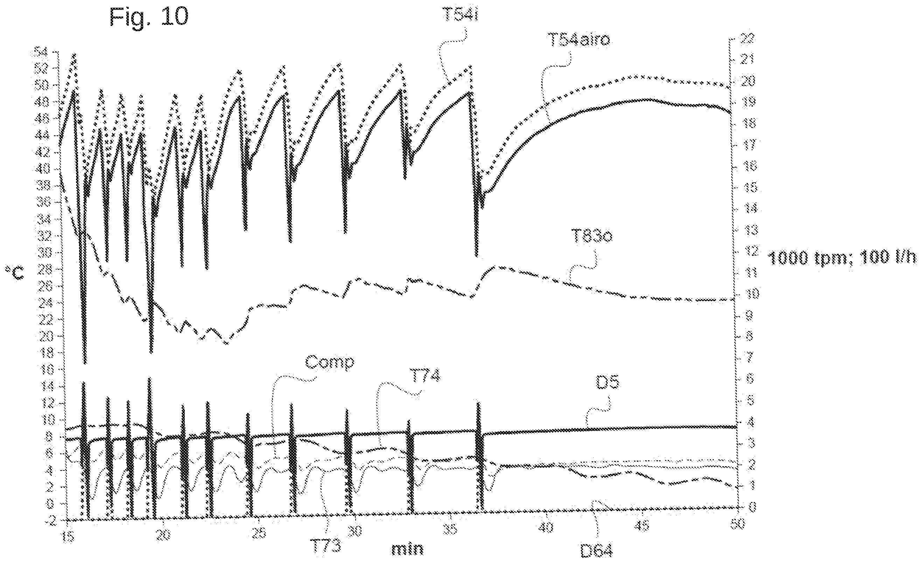

Le diagramme de la figure 10 montre la variation de divers paramètres du circuit de climatisation inversible indirect 1 en fonction du temps lors de son fonctionnement en mode déshumidification total. Les paramètres expérimentaux de ce diagramme sont les suivants :
- un deuxième échangeur de chaleur bifluide 83 délivrant une puissance thermique de 2 kW au fluide réfrigérant,
- une température extérieure illustrée par la courbe T74 passant de 10 à 0 °C,
- le fluide réfrigérant utilisé au sein de la première boucle de fluide réfrigérant A est du R1234yf,
- une température cible du flux d'air interne 100 en sortie du premier échangeur de chaleur de l'ordre de 3°,
- une température cible du flux d'air interne 100 en sortie du radiateur interne de l'ordre de 3°.

La courbe T73 correspond à l'évolution de la température du flux d'air interne 100 en sortie du premier échangeur de chaleur 9.

La courbe T54airo correspond à l'évolution de la température du flux d'air interne 100 en sortie du radiateur interne 54.

La courbe T54i correspond à l'évolution de la température du premier fluide caloporteur en entrée du radiateur interne 54.

La courbe T83o correspond à l'évolution de la température du deuxième fluide caloporteur en sortie du deuxième échangeur de chaleur bifluide 83.

La courbe Comp correspond à l'évolution du régime du compresseur 3.

La courbe D5 correspond à l'évolution du débit du premier fluide caloporteur au sein du premier échangeur de chaleur bifluide 5.

La courbe D64 correspond à l'évolution du débit du premier fluide caloporteur au sein du radiateur externe 64.

La redirection du premier fluide caloporteur uniquement vers le radiateur interne 54 ou à la fois vers le radiateur interne 54 et vers le radiateur externe 64 est illustrée sur le diagramme de la figure 10 par les variations du débit du premier fluide caloporteur au sein du radiateur externe 64 illustré par la courbe D64. Chaque pic de la courbe 64 correspond ainsi à une redirection ponctuelle du premier fluide caloporteur vers le radiateur externe 64. Chaque pic de la courbe 64 montre donc l'ouverture et la fermeture de la deuxième vanne d'arrêt 63.

La redirection ponctuelle du premier fluide caloporteur entraîne une variation du débit du premier fluide caloporteur au sein du premier échangeur de chaleur bifluide 5, illustré par la courbe D5. Le débit du premier fluide caloporteur au sein du premier échangeur de chaleur bifluide 5 subit tout d'abord une augmentation ponctuelle, ce qui correspond à un pic vers le haut de la courbe D5, suivi d'une diminution ponctuelle, ce qui correspond à un pic vers le haut de la courbe D5, pour revenir à un débit moyen, ici de l'ordre de 400 1/h.

Pour chaque pic de la courbe D64 et donc pour chaque redirection d'une partie du premier fluide caloporteur vers le radiateur externe 64, la température du flux d'air interne 100 en sortie du radiateur interne 54, illustrée par la courbe T54airo, et la température du premier fluide caloporteur en entrée du radiateur interne 54, illustrée par la courbe T54i, subissent une forte baisse. La température de ces paramètres à l'issue de chaque pic est inférieure à celle qu'ils avaient avant les pics. Entre chaque pic, ces valeurs augmentent sensiblement exponentiellement. La redirection ponctuelle du premier fluide caloporteur vers le radiateur externe 64 permet ainsi d'évacuer le surplus de chaleur et ainsi de maintenir le flux d'air intérieur 100 en sortie du radiateur interne 54 a une température moyenne comprise entre 40 et 48°C.

La courbe Comp correspondant à l'évolution du régime du compresseur 3, montre qu'au moment de chaque pic, le régime subit une variation sinusoïdale. Cette détermination du régime du compresseur 3 par l'unité centrale de contrôle 90 permet que le flux d'air intérieur 100 en sortie du premier échangeur de chaleur 9 soit maintenu à une température comprise entre 2 et 4°C, comme illustré par la courbe T73.

De plus, cette détermination du régime du compresseur 3 permet que la température moyenne du deuxième fluide caloporteur en sortie du deuxième échangeur de chaleur bifluide 83 au sein de la boucle de gestion thermique secondaire soit comprise entre 23 et 27°C, comme illustré par la courbe T83o. Cela permet notamment aux éléments refroidis au sein de la boucle de gestion thermique secondaire de ne pas être soumis à un deuxième fluide caloporteur ayant une trop haute température ce qui pourrait les détériorer, notamment en mode déshumidification pompe à chaleur où la température du fluide réfrigérant a tendance à augmenter exponentiellement si le surplus d'énergie calorifique n'est pas évacué.

Ainsi, on voit bien que le procédé de gestion du circuit de climatisation inversible indirect 1 selon l'invention permet, en mode déshumidification total ou simple une évacuation ponctuelle du surplus d'énergie calorifique générée afin de garantir un bon confort au sein de l'habitacle du véhicule automobile. Cela est particulièrement le cas lors de la présence d'un deuxième échangeur de chaleur bifluide 5 apportant de l'énergie calorifique depuis la boucle de gestion thermique secondaire.

## Revendications

1. Procédé de gestion d'un circuit de climatisation indirect inversible (1) pour véhicule automobile comportant une première boucle de fluide réfrigérant (A) dans laquelle circule un fluide réfrigérant et comprenant un premier échangeur de chaleur bifluide (5) agencé conjointement sur la première boucle de fluide réfrigérant (A) et sur une deuxième boucle de fluide caloporteur (B) dans laquelle circule un premier fluide caloporteur, le premier échangeur de chaleur bifluide (5) étant disposé de façon à permettre les échanges de chaleur entre la première boucle de fluide réfrigérant (A) et la deuxième boucle de fluide caloporteur (B),
la première boucle de fluide réfrigérant A comportant dans le sens de circulation du fluide réfrigérant :
∘ un compresseur (3),
∘ le premier échangeur de chaleur bifluide (5), disposé en aval dudit compresseur (3),
∘ un premier dispositif de détente (7),
∘ un premier échangeur de chaleur (9) étant destiné à être traversé par un flux d'air intérieur (100) au véhicule automobile,
∘ un deuxième dispositif de détente (11),
∘ un deuxième échangeur de chaleur (13) étant destiné à être traversé par un flux d'air extérieur (200) au véhicule automobile, et
∘ une conduite de contournement (30) du deuxième échangeur de chaleur (13), la deuxième boucle de fluide caloporteur (B) comprenant :
• un radiateur externe (64) et un radiateur interne (54) disposés en parallèle l'un de l'autre,
• un dispositif de redirection du premier fluide caloporteur en provenance du premier échangeur de chaleur bifluide (5) vers le radiateur externe (64) et/ou vers le radiateur interne (54), et
• un capteur de température (72) du premier fluide caloporteur disposé en aval du premier échangeur de chaleur bifluide (5),
ledit circuit étant apte à fonctionner selon :
• un mode de déshumidification simple, dérivé d'un mode de refroidissement dans lequel le flux d'air intérieur (100) est refroidi, et où le flux d'air intérieur (100) est refroidi puis réchauffé avant d'arriver dans l'habitacle, et
• un mode de déshumidification total, dérivé du mode pompe à chaleur dans lequel le flux d'air intérieur (100) est réchauffé, et où le flux d'air intérieur (100) est refroidi puis réchauffé avant d'arriver dans l'habitacle,
**caractérisé en ce que** le circuit de climatisation inversible indirect (1) comporte une unité centrale de contrôle (90) relié au capteur de température (72) du premier fluide caloporteur et apte à piloter le dispositif de redirection du premier fluide caloporteur,
lorsque le circuit de climatisation indirect (1) est en mode déshumidification total ou simple, l'unité centrale de contrôle (90) commande le dispositif de redirection du premier fluide caloporteur de sorte que :
• si la température mesurée au niveau du capteur de température (72) est supérieure ou égale à T72t + Y1, le premier fluide caloporteur est redirigé à la fois vers le radiateur interne (54) et vers le radiateur externe (64), dans lequel T72t est une valeur consigne de température du premier fluide caloporteur au niveau du capteur de température (72) et Y1 un différentiel de température compris entre 0,5 et 5 °C,
• si la température mesurée au niveau du capteur de température (72) est inférieure ou égale à T72t - Y2, le premier fluide caloporteur est redirigé uniquement vers le radiateur interne (54), dans lequel T72t est la valeur consigne de température du premier fluide caloporteur au niveau du capteur de température (72) et Y2 un différentiel de température compris entre 0,5 et 2 °C.

2. Procédé de gestion selon la revendication précédente, **caractérisé en ce que** l'unité centrale de contrôle (90) commande le dispositif de redirection du premier fluide de sorte que la température moyenne du flux d'air intérieur (100) en sortie du radiateur interne (54) soit comprise entre 40 et 48°C.

3. Procédé de gestion selon l'une des revendications précédentes, **caractérisé en ce que** lorsque le circuit de climatisation inversible (1) est en mode de déshumidification total ou simple, ladite unité centrale de contrôle (90) détermine le régime du compresseur (3) de sorte que la température moyenne du flux d'air intérieur (100) en sortie du premier échangeur de chaleur (9) soit comprise entre 2 et 4°C.

4. Procédé de gestion selon l'une des revendications précédentes, **caractérisé en ce que** la première boucle de fluide réfrigérant (A) comporte une conduite de dérivation (80) comportant un troisième dispositif de détente (12) disposé en amont d'un deuxième échangeur de chaleur bifluide (83), ledit deuxième échangeur de chaleur bifluide (83) étant également agencé conjointement sur une boucle de gestion thermique secondaire dans laquelle circule un deuxième fluide caloporteur, ladite boucle de dérivation (80) étant disposée entre un premier point de jonction (81) disposé en aval du premier échangeur de chaleur bifluide (5), entre ledit premier échangeur de chaleur bifluide (5) et le premier dispositif de détente (7) et un deuxième point de jonction (82) disposé en amont compresseur (3), entre le troisième échangeur de chaleur (13) et ledit compresseur (3).

5. Procédé de gestion selon la revendication précédente, **caractérisé en ce que** l'unité centrale de contrôle (90) détermine le régime du compresseur (3) également de sorte que la température moyenne du deuxième fluide caloporteur en sortie du deuxième échangeur de chaleur bifluide (83) au sein de la boucle de gestion thermique secondaire soit comprise entre 23 et 27°C.

6. Procédé de gestion selon l'une des revendications précédentes, **caractérisé en ce que** la deuxième boucle de fluide caloporteur (B) comporte :
∘ une première conduite de circulation (50) du premier fluide caloporteur comportant le radiateur interne (54) et reliant un premier point de connexion (61) disposé en aval du premier échangeur de chaleur bifluide (5) et un deuxième point de connexion (62) disposé en amont dudit premier échangeur de chaleur bifluide (5),
∘ une deuxième conduite de circulation (60) du premier fluide caloporteur comportant le radiateur externe (64) et reliant le premier point de connexion (61) et le deuxième point de connexion (62), et
∘ une pompe (17) disposée en aval ou en amont du premier échangeur de chaleur bifluide (5), entre le premier point de connexion (61) et le deuxième point de connexion (62).

7. Procédé de gestion selon la revendication précédente, **caractérisé en ce que** le dispositif de redirection du premier fluide caloporteur comporte une deuxième vanne d'arrêt (63) disposée sur la deuxième conduite de circulation (60), l'ouverture et la fermeture de ladite deuxième vanne d'arrêt (63) étant commandée par l'unité centrale de contrôle (90).

## Patentansprüche

1. Verfahren zur Verwaltung eines umkehrbaren indirekten Klimatisierungskreislaufs (1) für ein Kraftfahrzeug, der einen ersten Kühlfluidkreis (A) aufweist, in dem ein Kühlfluid zirkuliert, und einen ersten Zwei-Fluid-Wärmetauscher (5) enthält, der gemeinsam auf dem ersten Kühlfluidkreis (A) und auf einem zweiten Wärmeträgerfluidkreis (B) eingerichtet ist, in dem ein ersten Wärmeträgerfluid zirkuliert, wobei der erste Zwei-Fluid-Wärmetauscher (5) so angeordnet ist, dass er die Wärmetauschvorgänge zwischen dem ersten Kühlfluidkreis (A) und dem zweiten Wärmeträgerfluidkreis (B) erlaubt,
wobei der ersten Kühlfluidkreis A in Zirkulationsrichtung des Kühlfluids aufweist:
∘ einen Kompressor (3),
° den ersten Zwei-Fluid-Wärmetauscher (5), der stromabwärts hinter dem Kompressor (3) angeordnet ist,
° eine erste Expansionsvorrichtung (7),
° einen ersten Wärmetauscher (9), der dazu bestimmt ist, von einem Luftstrom (100) von innerhalb des Kraftfahrzeugs durchquert zu werden,
° eine zweite Expansionsvorrichtung (11),
° einen zweiten Wärmetauscher (13), der dazu bestimmt ist, von einem Luftstrom (200) von außerhalb des Kraftfahrzeugs durchquert zu werden, und
° eine Umgehungsleitung (30) des zweiten Wärmetauschers (13),
wobei der zweite Wärmeträgerfluidkreis (B) enthält:
• einen äußeren Kühler (64) und einen inneren Kühler (54), die parallel zueinander angeordnet sind,
• eine Umleitungsvorrichtung des vom ersten Zwei-Fluid-Wärmetauscher (5) kommenden ersten Wärmeträgerfluids zum äußeren Kühler (64) und/oder zum inneren Kühler (54), und
• einen Temperaturfühler (72) des ersten Wärmeträgerfluids, der stromabwärts hinter dem ersten Zwei-Fluid-Wärmetauscher (5) angeordnet ist,
wobei der Kreislauf arbeiten kann gemäß:
• einem einfachen Entfeuchtungsmodus, abgeleitet von einem Kühlmodus, wobei der innere Luftstrom (100) gekühlt wird, und bei dem der innere Luftstrom (100) gekühlt und dann wiedererwärmt wird, ehe er im Fahrgastraum ankommt, und
• einen vollständigen Entfeuchtungsmodus, abgeleitet vom Wärmepumpenmodus, wobei der innere Luftstrom (100) erwärmt wird, und bei dem der innere Luftstrom (100) gekühlt und dann wiedererwärmt wird, ehe er im Fahrgastraum ankommt,
**dadurch gekennzeichnet, dass** der indirekte umkehrbare Klimatisierungskreislauf (d) eine Steuerzentrale (90) aufweist, die mit dem Temperaturfühler (72) des ersten Wärmeträgerfluids verbunden ist und die Umleitungsvorrichtung des ersten Wärmeträgerfluids steuern kann,
wenn der indirekte Klimatisierungskreislauf (1) im vollständigen oder einfachen Entfeuchtungsmodus ist, die Steuerzentrale (90) die Umleitungsvorrichtung des ersten Wärmeträgerfluids derart steuert, dass:
• wenn die im Bereich des Temperaturfühlers (72) gemessene Temperatur höher als oder gleich T72t + Y1 ist, das erste Wärmeträgerfluid sowohl zum inneren Kühler (54) als auch zum äußeren Kühler (64) umgeleitet wird, wobei T72t ein Temperatursollwert des ersten Wärmeträgerfluids im Bereich des Temperaturfühlers (72) und Y1 ein Temperaturdifferential zwischen 0,5 und 5°C ist,
• wenn die im Bereich des Temperaturfühlers (72) gemessene Temperatur niedriger als oder gleich T72t - Y2 ist, das erste Wärmeträgerfluid nur zum inneren Kühler (54) umgeleitet wird, wobei T72t der Temperatursollwert des ersten Wärmeträgerfluids im Bereich des Temperaturfühlers (72) und Y2 ein Temperaturdifferential zwischen 0,5 und 2°C ist.

2. Verwaltungsverfahren nach dem vorhergehenden Anspruch, **dadurch gekennzeichnet, dass** die Steuerzentrale (90) die Umleitungsvorrichtung des ersten Fluids so steuert, dass die mittlere Temperatur des inneren Luftstroms (100) am Ausgang des inneren Kühlers (54) zwischen 40 und 48°C liegt.

3. Verwaltungsverfahren nach einem der vorhergehenden Ansprüche, **dadurch gekennzeichnet, dass**, wenn der umkehrbare Klimatisierungskreislauf (1) im vollständigen oder einfachen Entfeuchtungsmodus ist, die Steuerzentrale (90) die Betriebsart des Kompressors (3) so bestimmt, dass die mittlere Temperatur des inneren Luftstroms (100) am Ausgang des ersten Wärmetauschers (9) zwischen 2 und 4°C liegt.

4. Verwaltungsverfahren nach einem der vorhergehenden Ansprüche, **dadurch gekennzeichnet, dass** der erste Kühlfluidkreis (A) eine Bypassleitung (80) aufweist, die eine dritte Expansionsvorrichtung (12) aufweist, die stromaufwärts vor einem zweiten Zwei-Fluid-Wärmetauscher (83) angeordnet ist, wobei der zweite Zwei-Fluid-Wärmetauscher (83) ebenfalls gemeinsam auf einem sekundären Wärmeverwaltungskreis eingerichtet ist, in dem ein zweites Wärmeträgerfluid zirkuliert, wobei der Bypasskreis (80) zwischen einem ersten Verbindungspunkt (81), der stromabwärts hinter dem ersten Zwei-Fluid-Wärmetauscher (5) zwischen dem ersten Zwei-Fluid-Wärmetauscher (5) und der ersten Expansionsvorrichtung (7) angeordnet ist, und einem zweiten Verbindungspunkt (82) angeordnet ist, der stromaufwärts vor dem Kompressor (3) zwischen dem dritten Wärmetauscher (13) und dem Kompressor (3) angeordnet ist.

5. Verwaltungsverfahren nach dem vorhergehenden Anspruch, **dadurch gekennzeichnet, dass** die Steuerzentrale (90) den Betriebszustand des Kompressors (3) ebenfalls so bestimmt, dass die mittlere Temperatur des zweiten Wärmeträgerfluids am Ausgang des zweiten Zwei-Fluid-Wärmetauschers (83) innerhalb des sekundären Wärmeverwaltungskreises zwischen 23 und 27°C liegt.

6. Verwaltungsverfahren nach einem der vorhergehenden Ansprüche, **dadurch gekennzeichnet, dass** der zweite Wärmeträgerfluidkreis (B) aufweist:
° eine erste Zirkulationsleitung (50) des ersten Wärmeträgerfluids, die den inneren Kühler (54) aufweist und einen ersten Anschlusspunkt (61), der stromabwärts hinter dem ersten Zwei-Fluid-Wärmetauscher (5) angeordnet ist, und einen zweiten Anschlusspunkt (62) verbindet, der stromaufwärts vor dem ersten Zwei-Fluid-Wärmetauscher (5) angeordnet ist,
∘ eine zweite Zirkulationsleitung (60) des ersten Wärmeträgerfluids, die den äußeren Kühler (64) aufweist und den ersten Anschlusspunkt (61) und den zweiten Anschlusspunkt (62) verbindet, und
∘ eine Pumpe (17), die stromabwärts hinter oder stromaufwärts vor dem ersten Zwei-Fluid-Wärmetauscher (5) zwischen dem ersten Anschlusspunkt (61) und dem zweiten Anschlusspunkt (62) angeordnet ist.

7. Verwaltungsverfahren nach dem vorhergehenden Anspruch, **dadurch gekennzeichnet, dass** die Umleitungsvorrichtung des ersten Wärmeträgerfluids einen zweiten Absperrschieber (63) aufweist, der auf der zweiten Zirkulationsleitung (60) angeordnet ist, wobei das Öffnen und Schließen des zweiten Absperrschiebers (63) von der Steuerzentrale (90) gesteuert wird.

## Claims

1. Method of managing a reversible indirect air-conditioning circuit (1) for a motor vehicle, including a first refrigerant fluid loop (A) in which circulates a refrigerant fluid and comprising a first dual-fluid heat exchanger (5) arranged conjointly on the first refrigerant fluid loop (A) and on a second heat-transfer fluid loop (B) in which circulates a first heat-transfer fluid, the first dual-fluid heat exchanger (5) being disposed so as to enable exchanges of heat between the first refrigerant fluid loop (A) and the second heat-transfer fluid loop (B),
the first refrigerant fluid loop (A) comprising, in in the direction of circulation of the refrigerant fluid:
∘ a compressor (3),
∘ the first dual-fluid heat exchanger (5), disposed downstream of said compressor (3),
∘ a first expansion device (7),
∘ a first heat exchanger (9) intended to have passed through it a flow of air (100) internal to the motor vehicle,
∘ a second expansion device (11),
∘ a second heat exchanger (13) intended to have passed through it a flow of air (200) external to the motor vehicle, and
∘ a pipe (30) bypassing the second heat exchanger (13) the second heat-transfer loop (B) comprising:
• an external radiator (64) and an internal radiator (54) disposed in parallel with one another,
• a device for redirecting the first heat-transfer fluid coming from the first dual-fluid heat exchanger (5) toward the external radiator (64) and/or toward the internal radiator (54), and
• a sensor (72) of the temperature of the first heat-transfer fluid disposed downstream of the first dual fluid heat exchanger (5),
said circuit being adapted to operate in accordance with:
• a simple dehumidification mode derived from a cooling mode in which the interior flow of air (100) is cooled and in which the interior flow of air (100) is cooled and then heated before reaching the vehicle interior compartment, and
• a total dehumidification mode, derived from the heat pump mode in which the interior flow of air (100) is heated and in which the interior flow of air (100) is cooled and then heated before reaching the vehicle interior compartment,
**characterized in that** the reversible indirect air-conditioning circuit (1) includes a central control unit (90) connected to the sensor (72) of the temperature of the first heat-transfer fluid and adapted to control the device for redirecting the first heat-transfer fluid,
when the indirect air-conditioning circuit (1) is in total or simple dehumidification mode the central control unit (90) controls the device for redirecting the first heat-transfer fluid so that:
• if the temperature measured at the level of the temperature sensor (72) is greater than or equal to T72t + Y1, the first heat-transfer fluid is redirected both toward the internal radiator (54) and toward the external radiator (64), where T72t is a temperature setpoint value of the first heat-transfer fluid at the level of the temperature sensor (72) and Y1 is a temperature differential between 0.5 and 5°C inclusive,
• if the temperature measured at the level of the temperature sensor (72) is less than or equal to T72t - Y2, the first heat-transfer fluid is redirected only toward the internal radiator (54), where T72t is the temperature setpoint value of the first heat-transfer fluid at the level of the temperature sensor (72) and Y2 is a temperature differential between 0.5 and 2°C inclusive.

2. Management method according to the preceding claim, **characterized in that** the central control unit (90) controls the device for redirecting the first fluid so that the mean temperature of the interior flow of air (100) leaving the internal radiator (54) is between 40 and 48°C inclusive.

3. Management method according to either of the preceding claims, **characterized in that** when the reversible air-conditioning circuit (1) is in total or simple dehumidification mode, said central control unit (90) determines the operating conditions of the compressor (3) so that the mean temperature of the interior flow of air (100) leaving the first heat exchanger (9) is between 2 and 4°C inclusive.

4. Management method according to any one of the preceding claims, **characterized in that** the first refrigerant fluid loop (A) includes a branch pipe (80) including a third expansion device (12) disposed upstream of a second dual-fluid heat exchanger (83), said second dual-fluid heat exchanger (83) also being arranged conjointly on a secondary thermal management loop in which circulates a second heat-transfer fluid, said branch loop (80) being disposed between a first junction point (81) disposed downstream of the first dual-fluid heat exchanger (5), between said first dual-fluid heat exchanger (5) and the first expansion device (7) and a second junction point (82) disposed upstream of the compressor (3), between the third heat exchanger (13) and said compressor (3).

5. Management method according to the preceding claim, **characterized in that** the central control unit (90) also determines the operating conditions of the compressor (3) so that the mean temperature of the second heat-transfer fluid leaving the second dual-fluid heat exchanger (83) in the secondary thermal management loop is between 23 and 27°C inclusive.

6. Management method according to one of the preceding claims, **characterized in that** the second heat-transfer fluid loop (B) includes:
∘ a first pipe (50) for circulation of the first heat-transfer fluid including the internal radiator (54) and connecting a first connection point (61) disposed downstream of the first dual-fluid heat exchanger (5) and a second connection point (62) disposed upstream of said first dual-fluid heat exchanger (5),
∘ a second pipe (60) for circulation of the first, heat-transfer fluid including the external radiator (64) and connecting the first connection point (61) and the second connection point (62), and
∘ a pump (17) disposed downstream or upstream of the first dual-fluid heat exchanger (5), between the first connection point (61) and the second connection point (62) .

7. Management method according to the preceding claim, **characterized in that** the device for redirecting the first heat-transfer fluid includes a second stop valve (63) disposed on the second circulation pipe (60), the opening and closing of said second stop valve (63) being controlled by the central control unit (90).
